# EUROPEAN PATENT APPLICATION

(11) **EP 3 648 097 A1**
(43) Date of publication of application: **06.05.2020**
(21) Application number: 19202102.0
(22) Date of filing: 08.10.2019
(51) Int. Cl.: G09G 5/14, G06F 3/14, G09G 5/12

(54) **VIDEO CONTROL DEVICE AND VIDEO WALL SYSTEM USING THE SAME AND CONTROL METHOD FOR OUTPUTTING VIDEO IMAGES TO THE VIDEO WALL**

(30) Priority: 01.11.2018 TW 107138843
(71) Applicant: ATEN International Co., Ltd., New Taipei City 221 (TW)
(72) Inventor: HUANG, SHIH-JUNG, 221 New Taipei City (TW); CHEN, YI-JEN, 221 New Taipei City (TW); CHANG, TSU-MU, 221 New Taipei City (TW)
(74) Representative: Lang, Christian

(57) **Abstract**

A video control device for a video wall is provided. The video wall includes first and second display devices disposed adjoining each other in the vertical direction. The video control device includes a video receiver for receiving a video signal having multiple frames, and a video delay controller electrically coupled to the video receiver, for receiving and storing data of the multiple frames. The data of each frame includes data of a first sub-frame and a second sub-frame. In one embodiment, a control method controls output of the video data to the video wall, wherein the video delay controller reads stored data of one of the multiple frames, and respectively outputs the first and second sub-frames of that frame to the first and second display devices at first and second time points, respectively, wherein the first and second time points are separate by a defined time interval.

## Description

### BACKGROUND OF THE INVENTION

### Field of the Invention

This invention relates to a video output technology, and in particular, it relates to a video control device, a video wall employing such control device, and related control method for controlling output of video images to display devices of the video wall, that can effectively eliminate the visual discontinuity between vertically adjoining display devices.

### Description of Related Art

With the development of commerce, there is a need for large format display systems for advertisement or other information display purposes such as at conferences, etc. Due to the size limitations of individual large format display devices, there is an increasing need on the market for display systems that employ multiple individual display devices disposed adjoining each other to form a large display area, referred to as video walls.

In a video wall system, because multiple display devices are spliced together, a video signal distribution device, such as a matrix switch, is used to output either multiple individual video images or multiple sub-images divided from one video image to the multiple display devices, in order to realize large format displays needed to display multi-media information.

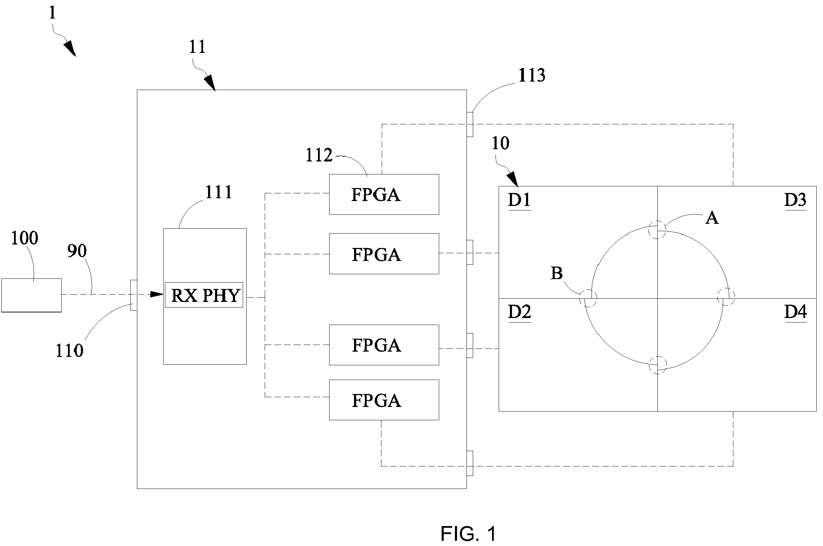

In practice, because the individual display devices of the video wall receive independent video input signals, there is no communication between the display devices. Thus, the synchronization among the display devices has been a major concern in the industry as well as an important factor that impacts the display quality of the video wall. Refer to Fig. 1, which shows the system architecture of a conventional video wall system. The video wall system 1 includes a video wall 10 and a video control device 11. The video wall 10 is a two-dimensional display array formed by multiple display devices D1-D4 disposed adjoining each other. The video control device 11 includes at least one video input interface 110, a video input processing unit 111, multiple video output processing units 112 (e.g. FPGA components), and multiple video output interfaces 113. Each video input interface 110 is electrically coupled to a video source 100 to receive a video signal 90 that includes multiple frames of video data. Each of the video output interfaces 113 is respectively electrically coupled to one of the display devices D1-D4. The video input processing unit 111 has a video receiver (RX PHY) for receiving the video signal 90, and is configured to divide each frame of video data into sub-frames of video data corresponding to the display devices D1-D4, which are then output to the corresponding display devices D1-D4 via the respective video output processing units 112.

Because the pixel clock of the multiple display devices D1-D4 are not synchronized, the display on the multiple display devices may have a display time difference of up to 1-3 frames. If the objects in the video signal are moving, the unsynchronized display may cause serious step discontinuities at the boundaries between display devices, as depicted in the dashed-line circle A in Fig. 1. To solve such problems, some conventional systems use clock tracker techniques, or uses a common clock, to prevent the step discontinuity. In practice, however, such techniques are only effective in solving step discontinuity problems in the horizontal direction (i.e. between display devices that are adjoining each other in the horizontal direction). For display devices that are adjoining each other in the vertical direction, due to the time difference in the image formation, step discontinuities can form, as depicted in the dashed-line circle B in Fig. 1, which is not effectively eliminated by the above-mentioned techniques.

### SUMMARY

Accordingly, the present invention is directed to a video control device, a video wall system employing such video control device, and related control method for controlling output of video images to the display devices of the video wall, that substantially obviate one or more of the problems due to limitations and disadvantages of the related art.

Embodiments of the present invention provide a control method for controlling output of video images to a video wall, which, by adjusting the time delay of video signals outputted to neighboring display devices that are disposed adjoining each other in the vertical direction (referred to herein as vertically adjoining display devices), solves the problem of visual discontinuity at the boundary between such vertically adjoining display devices.

Embodiments of the present invention provide a video control device and a video wall employing such video control device, where the video control device is provided with a data memory for temporarily storing video data; and by controlling the delay timing of the video signal output to different vertically adjoining display devices, solves the problem of visual discontinuity at the boundary between vertically adjoining display devices. The video control device according to embodiments of the present invention may be adopted for video walls formed of display devices of various brands or models, without having to modify the internal structures of the display devices, so as to solves the visual discontinuity problem without significant cost increase.

One embodiment of the present invention provides a control method for outputting video data to a video wall, including: first, spatially arranging multiple display devices together to form the video wall, wherein the multiple display devices includes a first display device and a second display device that is disposed adjoining the first display device in a vertical direction. Then, by a video control device, receiving a video signal, wherein the video signal includes data of multiple frames of image. Then, by the video control device, outputting data of a first sub-frame of a frame of the multiple frames of image to the first display device at a first time point, waiting for a defined time interval, then outputting data of a second sub-frame of the frame to the second display device at a second time point.

Another embodiment of the present invention provides a video control device for a video wall, the video wall including a first display device and a second display device that is disposed adjoining the first display device in a vertical direction, the video control device including a video receiver and a video delay controller. The video receiver is configured to receive a video signal, wherein the video signal includes data of multiple frames of image. The video delay controller is electrically coupled to the video receiver, and configured to receive and store the data of the multiple frames, wherein data of each frame of the multiple frames of image includes data of a first sub-frame of image and data of a second sub-frame of image. The video delay controller is further configured to read out data of one frame of the multiple frames, and to output the data of the first and the second sub-frames of the one frame respectively to the first and second display devices at first and second time points, wherein the first and second time points are separate by a defined time interval.

Another embodiment of the present invention provides a video wall system which includes a video wall and a video control device. The video wall is formed by multiple display devices spatially arranged together, including a first display device and a second display device that is disposed adjoining the first display device in a vertical direction. The video control device includes a video receiver and a video delay controller. The video receiver is configured to receive a video signal, wherein the video signal includes data of multiple frames of image. The video delay controller is electrically coupled to the video receiver, and configured to receive and store the data of the multiple frames, wherein data of each frame of the multiple frames of image includes data of a first sub-frame of image and data of a second sub-frame of image. The video delay controller is further configured to read out data of one frame of the multiple frames, and to output the data of the first and the second sub-frames of the one frame respectively to the first and second display devices at first and second time points, wherein the first and second time points are separate by a defined time interval.

### BRIEF DESCRIPTION OF THE DRAWINGS

Figure 1 schematically illustrates the system architecture of a conventional video wall system.
Figure 2 schematically illustrates the system architecture of a video wall system according to an embodiment of the present invention.
Figure 3A illustrates an image frame of a video signal in an embodiment of the present invention.
Figure 3B illustrates an image frame of a video signal in an embodiment of the present invention which is divided by an 2x2 division into four sub-frames.
Figure 4 schematically illustrates a video delay controller according to an embodiment of the present invention.
Figure 5 schematically illustrates an alternative video delay controller according to another embodiment of the present invention.
Figure 6A is a flow chart showing a control method for outputting video images to the video wall according to an embodiment of the present invention.
Figure 6B is a flow chart showing a control method for outputting video images with a timing delay.
Figure 7A schematically illustrates a visual discontinuity at a boundary of two vertically adjoining display devices in a conventional video wall system.
Figure 7B schematically illustrates the elimination of visual discontinuity at a boundary of two vertically adjoining display devices in a video wall system according to embodiments of the present invention.

### DETAILED DESCRIPTION OF PREFERRED EMBODIMENTS

Embodiments of the present invention are described below with reference to the drawings. The invention may be embodied in many other forms, and the descriptions below should not be interpreted to limit the scope of the invention. The embodiments are described here to provide a detailed description of the invention to those skilled in the art. In the drawings, like reference symbols are used to refer to like components. The embodiments are described below with reference to the drawings to explain the video control device and the video wall system employing such a video control device, as well as a method of outputting video signal to the video wall, but they do not limit the scope of the invention.

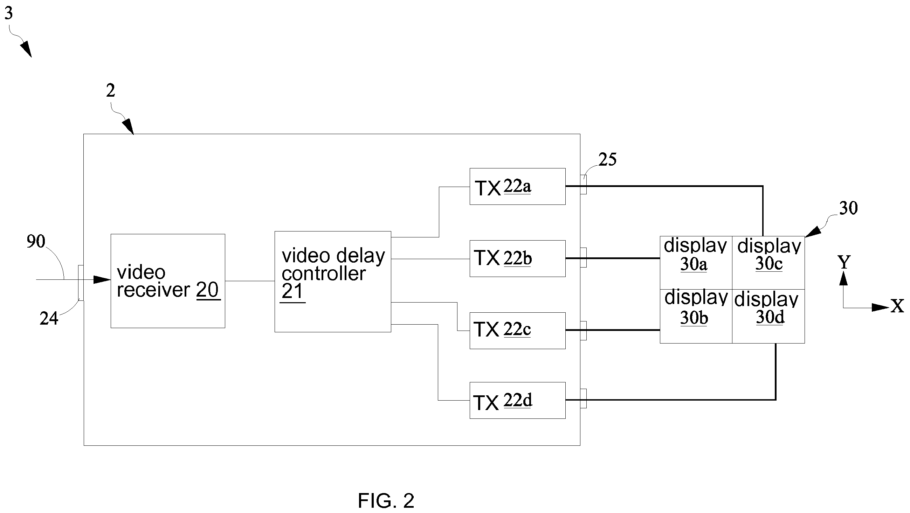

Fig. 2 schematically illustrates the system architecture of video wall system according to an embodiment of the present invention. As shown in Fig. 2, the video wall system 3 includes a video wall 30 and a video control device 2. The video wall 30 is formed by multiple display devices 30a - 30d spatially spliced together. In the illustrated embodiment, a video wall having a 2x2 array of display devices is used as an example. The video wall 30 includes, in the first column in the vertical direction Y, a first display device 30a and a second display device 30b that is disposed adjoining the first display device 30a in the vertical direction; and in the second column in the vertical direction Y, a third display device 30c and a fourth display device 30d that is disposed adjoining the third display device 30c in the vertical direction. The first row in the horizontal direction X has the first display device 30a and the third display device 30c that is disposed adjoining the first display device 30a in the horizontal direction; and the second row in the horizontal direction Y has the second display device 30b and the fourth display device 30d that is disposed adjoining the second display device 30c in the horizontal direction. Each of the display devices 30a - 30d may be, without limitation, an LCD (liquid crystal) display, or an LED (light emitting diode) display, such as a OLED (organic light emitting diode) display device.

The video control device 2 may be a KVM (keyboard, video, mouse) switch, a video matrix switch, or another device that functions to control division of a image. In this embodiment, the video control device 2 is a video matrix switch. Such video matrix switches are familiar to those skilled in the relevant art, and only components that reflect characteristics of the present invention are described in detail here. The video control device 2 includes a video input interface 24, multiple video output interfaces 25, a video receiver 20, a video delay controller 21, and multiple video transmitters (TX PHY) 22a-22d. The video input interface 24 is configured to receive a video signal 90. In this embodiment, although only one video input interface 24 is shown, multiple video input interfaces may be provided based on need, and the number is not limited to what is shown. The multiple video output interfaces 25 are respectively electrically coupled to the multiple display devices 30a-30d to output video data to the corresponding display devices 30a-30d to be displayed on them. In one embodiment, the video input interface 24 and the video output interfaces 25 may have the same or different formats. The formats of the video input interface 24 and the video output interfaces 25 may be, without limitation, HDMI (High Definition Multimedia Interface), DVI (Digital Visual Interface), or DP (Display Port).

The video receiver 20 is electrically coupled to the video input interface 24 to receive the video signal 90. In this embodiment, the video signal 90 includes multiple frames of image data, which form a moving image at a specified frame rate. Generally speaking, the frame rate describes the dynamic image rate expressed as a number of frames per second (FPS) or Hertz (Hz). Further, the video signal 90 includes audio data, so as to form multimedia data having synchronized image and audio. The video delay controller 21 is electrically coupled to the video receiver 20 to receive and store the multiple frames of image data. In an embodiment of the video wall display, the data of each frame of image includes the necessary data for display on the corresponding display devices 30a-30d.

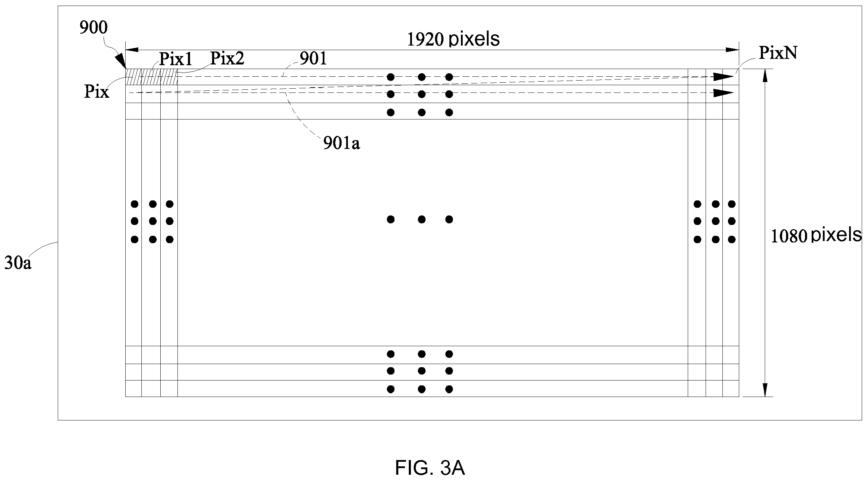

Fig. 3A illustrates an image frame of a video signal in an embodiment of the present invention. In the embodiment shown in Fig. 3A, each image frame 900 has 1920 x 1080 pixels. For example, if each image frame 900 is displayed on a single display device 30a, multiple scan lines (rows) 901 will be sequentially scanned to cause the corresponding pixels to display the image data. When each line is scanned, the pixels Pix on that line will have obtained the corresponding image data and will display the data. Take the example of a thin film transistor liquid crystal display (TFT LCD) device, the signal scanning scheme is to sequentially scan one horizontal row at a time. A gate driver IC is coupled to the gate electrode of each transistor to operate the On and Off of each row of transistors. When scanning a row of pixels, the transistors for the entire row of pixels are turned on at once (e.g. the row 900 of pixels Pix, Pix1, Pix2, ... PixN as shown in Fig. 3A). A source driver IC applies the respective control voltages, which correspond to the data to be displayed by pixels, to the transistor channels formed between the source and drain electrodes of the respective transistors. This changes the color combination of the light of the pixels, thereby forming the image. It should be noted that although this embodiment uses TFT LCD as an example, other flat panel displays, such as OLED display devices operate on the same principle. The scanning scheme is well known to those skilled in the relevant art, and will not be described in further detail. Further, because the display devices have the above-described image formation characteristics, when the image is formed at the boundary between two vertically adjoining display devices of a video wall, there will be a time difference in the image formation, causing visual discontinuity perceived by the viewer.

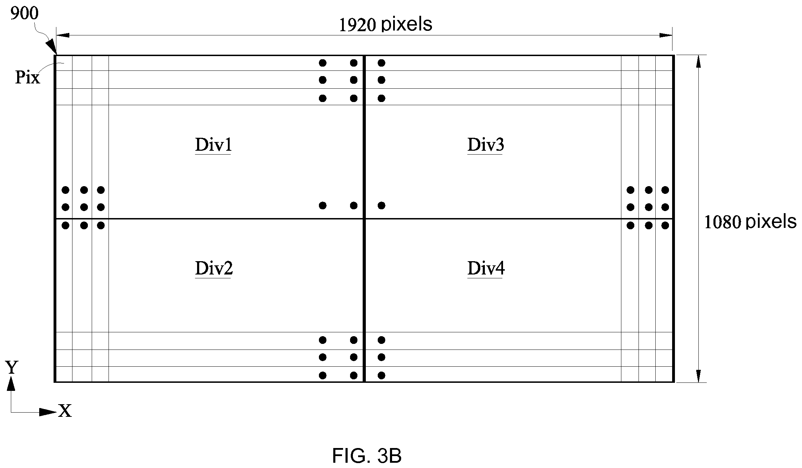

Fig. 3B illustrates an image frame of a video signal in an embodiment of the present invention which is divided by an 2x2 division into four sub-frames. As shown in Fig. 3B, because the video wall in this embodiment is formed by 2x2 display devices spatially arranged together, the image frame 900 will be divided into four sub-frame images Div1 - Div4. These include a first sub-frame image Div1 and a second sub-frame image Div2 that are adjoining each other along the vertical direction Y, and the data of sub-frame images Div1 and Div2 are respectively outputted to the corresponding display devices 30a and 30b. Similarly, a third sub-frame image Div3 and a fourth sub-frame image Div4 are adjoining each other along the vertical direction, and the data of sub-frame images Div3 and Div3 are respectively outputted to the corresponding display devices 30c and 30d. The video delay controller 21 reads the data of one frame of the multiple frames of images that have been stored, such as the frame image 900 shown in Fig. 3B, divides the frame image 900 to form sub-frame data Div1 - Div4, and then respectively outputs them to the video transmitters (TX PHY) 22a-22d.

Take the example of the first and second sub-frame images Div1 and Div2, which are to be output to the vertically adjoining display devices 30a and 30b, the video delay controller 21 outputs the data of the first sub-frame image Div1 and second sub-frame image Div2 to the video transmitters (TX PHY) 22b and 22c at a first time point and a second time point, respectively. The video transmitters 22b and 22c outputs the various sub-frame image data from the video delay controller 21 to the corresponding display devices 30a and 30b via the video output interfaces 25. The first time point and the second time point are separate by a defined time interval. The defined time interval may be a length of time required to display one frame of image or to display two or more frames of image, a length of time required to display the first or the second sub-frame of image, a length of time required to form one scan line of image, or a length of time required to form one pixel of a scan line.

The defined time interval is explained further below. In an embodiment in which the defined time interval is the length of time required to display one frame of image or two or more frames of image, the video transmitter 22b first outputs the first sub-frame image Div1 to the display device 30a, then waits for the defined time interval which is the length of time required to display one frame or two or more frames of image; then, the video delay controller 21 outputs the second sub-frame image Div2 to the video transmitter 22c which in turn outputs it to the display device 30b. In the example of an LCD device having a 1920 x 1080 display resolution, there are 1080 horizontal scan lines. Typically, the frame rate (FPS) is 60 Hz, i.e. the display device displays 60 frames per second, so the length of time required to display one frame is 1/60 ≈ 16 ms. Thus, if the defined time interval is the length of time required to display one frame, it is 16 ms; if it is the length of time required to display two frames, it is 32 ms; etc. It should be noted that the length of time required to display one frame depends on the frame rate of the display device, and the user may set the corresponding defined time interval based on need. The invention is not limited to the above-described examples.

It should be noted that while in the above description the defined time interval is the length of time required to display one or two or more frames, the user may extend or shorten the time interval based on practical need; for example, the defined time interval may be extended to the length of time required to display more than two frames, or be shortened to the length of time required to form one scan line, or one or more pixels, etc. Also, the length of time required to display a first or second sub-frame, the length of time required to form one scan line, or the length of time required to form one pixel of the scan line, all depend the frame rate. Therefore, the defined time interval is not limited to any of the specific values described above. In another embodiment, the defined time interval may be empirically set to a fixed value. In yet another embodiment, the defined time interval is user-modifiable via a user interface implemented by an application or firmware, such as a graphical user interface, so that the user may set the defined time interval based on their need. In another embodiment, the video control device may automatically adjust the defined time interval based on the frame rate of the current display devices.

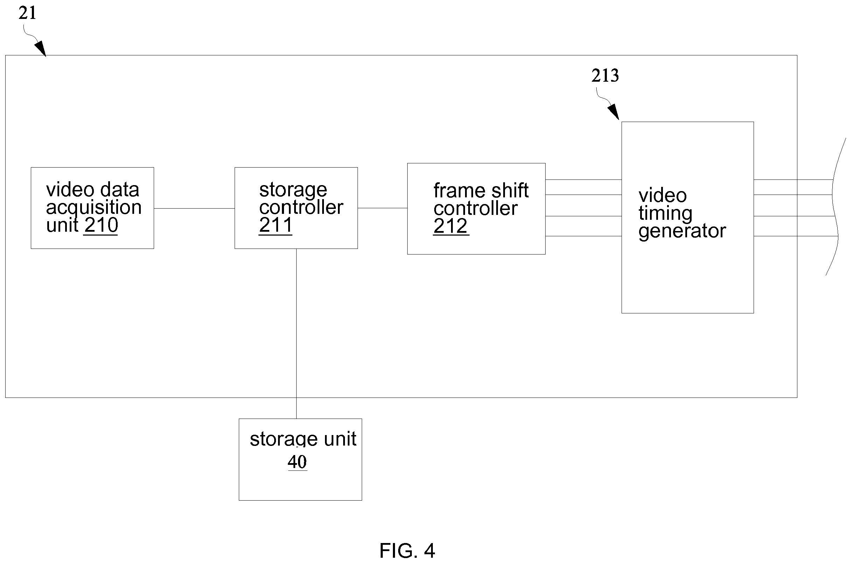

Fig. 4 schematically illustrates a video delay controller according to an embodiment of the present invention. As shown in Fig. 4, the video delay controller 21 includes a video data acquisition unit 210, a storage controller 211, and a frame shift controller 212. Referring to both Figs. 2 and 4, the video data acquisition unit 210 is electrically coupled to the video receiver 20, to acquire the data of each video frame from the video signal 90. The storage control unit 211 is electrically coupled to the video data acquisition unit 210, and controls the storage of the data of each frame into a storage unit (e.g. a non-volatile memory) 40. The frame shift controller 212 is electrically coupled to the storage controller 211, to control the storage controller 211 to acquire, from the storage unit 40, video data corresponding to each of the display devices 30a -30d. The frame shift controller 212 further controls the output of the video data to the corresponding display devices 30a-30d.

In this embodiment, the storage unit 40 stores data of whole frames of image. Using the frame data example shown in Fig. 3B, the frame shift controller 212 obtains the data of the frame, and then divides the frame into a number of sub-frames based on the spatial arrangement of the display devices in the video wall system. For example, in this embodiment, the video wall has a 2x2 arrangement. Thus, after the frame shift controller 212 acquires the frame, it divides the frame into 4 sub-frames, such as sub-frames Div1 - Div4 shown in Fig. 3B. After the division, using the example of the vertically adjoining display devices 30a and 30b, the frame shift controller 212 determines the time interval between outputting the first sub-frame and outputting the second sub-frame, and outputs the first and the second sub-frames based on the time interval.

In this embodiment, the video delay controller 21 further includes a video timing generator 213, which is electrically coupled to the frame shift controller 212. The video timing generator 213 receives the sub-frame data from the frame shift controller 212 and converts the data into a video sequence data. For example, take the example of the first and second sub-frames, after the video timing generator 213 receives the data of the first and second sub-frames Div1 and Div2, it respectively converts them to a first video sequence data and a second video sequence data, and outputs the first and second video sequence data to the corresponding display devices 30a and 30b. It should be noted that the video sequence data is a serial data including clock data and pixel data, and is outputted in a form such as 01011001 ... via a signal transmission line to the display device.

It should be noted that, although in the above embodiment, the frame shift controller 212 first reads out the whole frame data from the storage unit 40, then divides the whole frame based on the arrangement of the display devices in the video wall, the invention is not limited to such. For example, in another embodiment, the frame shift controller 212 obtains the manner of frame division beforehand based on the number and arrangement of the display devices, then respectively reads out only the video data needed for each display device, and then outputs the video data that has been read out to the respective display devices with delays based on the defined time interval.

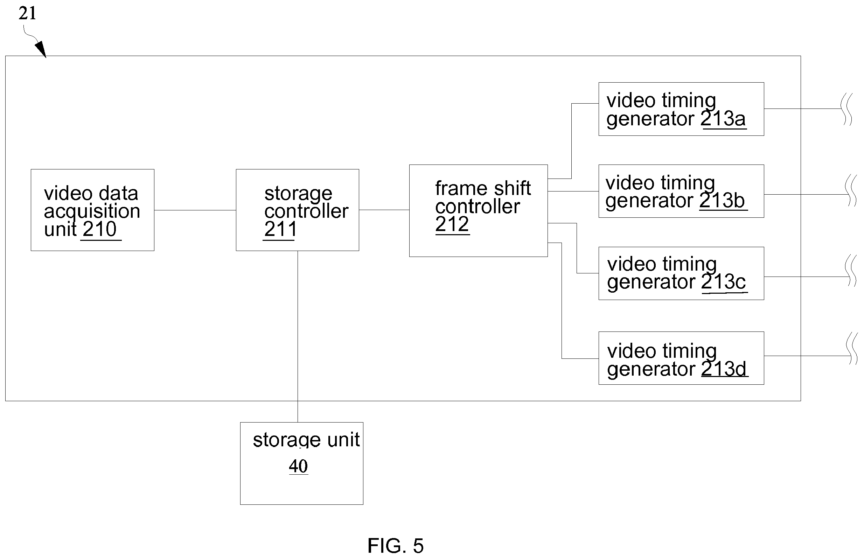

In the embodiment shown in Fig, 4 above, the video timing generator 213 is a single component, which has multiple channels respectively electrically coupled to the video transmitters (TX PHY) 22a-22d shown in Fig. 2. Fig. 5 schematically illustrates a video delay controller according to another embodiment of the present invention. As show in Fig. 5, the video timing generator 213 is formed of multiple independent video timing generators 213a-213d, each electrically coupled to the frame shift controller 212, where each of the video timing generators 213a-213d is respectively coupled to one of the video transmitters 22a-22d. The video timing generator 213b generates a first video sequence data based on the data of the first sub-frame, so that the first sub-frame is displayed on the first display device 30a. The video timing generator 213c generates a second video sequence data based on the data of the second sub-frame, so that the second sub-frame is displayed on the second display device 30b. The video timing generator 213a generates a third video sequence data based on the data of the third sub-frame, so that the third sub-frame is displayed on the third display device 30c. The video timing generator 213d generates a fourth video sequence data based on the data of the fourth sub-frame, so that the fourth sub-frame is displayed on the fourth display device 30d.

In embodiments of the present invention, various component of the video delay controller 21, including the video data acquisition unit 210, storage controller 211, frame shift controller 212, and video timing generator 213, may be implemented in electrical circuitry and/or computer executable program code stored in computer readable non-volatile memories.

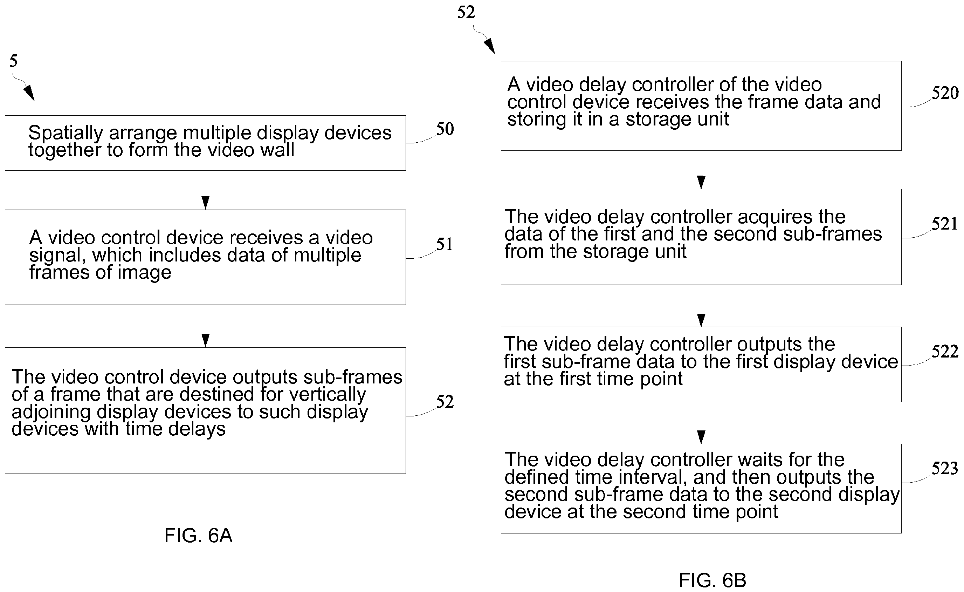

Fig. 6A is a flow chart showing a control method for outputting video images to a video wall according to an embodiment of the present invention. As shown in Fig. 6A, the flow 5 includes steps 50-52. In step 50, multiple display devices are arranged together spatially to form the video wall. As illustrated in Fig. 2, in step 50, the video wall 30 is a display region of a 2x2 array, formed by display devices 30a, 30b, 30c and 30d. In the vertical direction Y, the display device 30a and display device 30b are adjoining each other, and the display device 30c and display device 30d are adjoining each other. In the horizontal direction X, the display device 30a and display device 30c are adjoining each other, and the display device 30b and display device 30d are adjoining each other. In step 51, the video control device receives a video signal, where the video signal includes data of multiple frames of image. As illustrated in Fig. 2, in step 51, the video input interface 24 (e.g., DVI, HDMI, DP, or other interfaces) of the video control device 2 is coupled to a video source (not shown) to receive the video signal 90 provided by the video source. The video source may be, without limitation, a DVD player, a computer, a projector, etc. The video control device 2 receives the video signal 90, which includes data of multiple frames of image, via the video input interface 24.

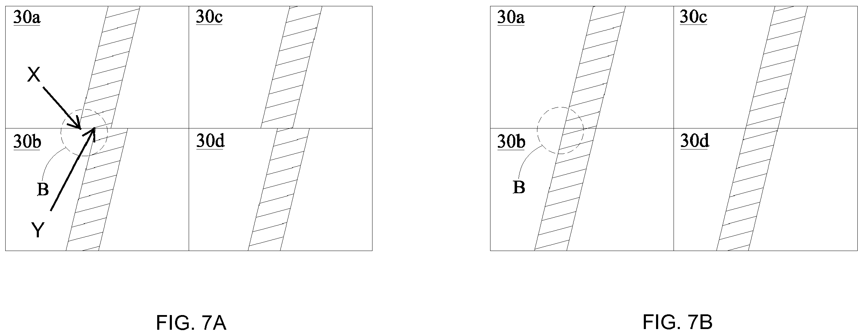

Fig. 7A schematically illustrates a visual discontinuity at a boundary of two vertically adjoining display devices in a conventional video wall system. In a conventional video wall system, the video control device divides each individual frame of the video signal into multiple sub-frames, and outputs the sub-frames to corresponding display devices. When the video signal is a dynamic image (e.g., subsequent frames of the video contain different information), without using the techniques described in embodiments of the present invention, step discontinuities will form at the boundaries of vertically adjoining display devices, due to different timing of image formation, as depicted in area B of Fig. 7A. The reason is as follows.

When a frame is displayed on a display device, due to the line-by-line scanning scheme described earlier, the lower lines are scanned later than the upper lines; therefore, when an object in the image is moving, the upper part of the object will appear to move earlier than the lower part, causing a slight slanting of the object (as depicted by the bar shape in each individual display device 30a-30d in Fig. 7A). When the object is displayed on one single display screen, such slight slanting does not present a visual problem. However, when the frame of image is divided into sub-frames and displayed on different individual display devices of a video wall in a conventional display method, the upper display device (e.g. 30a) and the lower display device (e.g. 30b) start the line-by-line scanning approximately at the same time. I.e., the top line of the upper display device 30a and the top line of the lower display device 30b are scanned at approximately the same time, and the bottom line of the upper display device 30a and the bottom line of the lower display device 30b are scanned at approximately the same time (later than the top lines). Consider two image points X and Y that are immediately adjacent to each other in the vertical direction but now belong to two different sub-frames due to frame division. As a result of the conventional scanning method, the image point Y located at the top line of the lower display device 30b will be scanned earlier than the image point X located at the bottom line of the upper display device 30a, by a length of time that is approximately the time required to scan one frame on the display device 30a/30b (i.e., one frame length). This results in a visual discontinuity as depicted in the dashed line circle B in Fig. 7A. On the other hand, had the image points X and Y been displayed on one single display device in a line-by-line scan, the image point Y will have appeared slightly later than the image point X (by the time length of one scan line), creating the slightly slanted effect but without any visual discontinuity.

This discontinuity adversely impact the visual effect perceived by the user. Fig. 7B schematically illustrates the elimination of visual discontinuity at a boundary of two vertically adjoining display devices in a video wall system according to embodiments of the present invention. In the video control method in embodiments of the present invention, by controlling the timing of image formation for the vertically adjoining display devices 30a and 30b, or 30c and 30d, the visual discontinuity at a boundary of such vertically adjoining display devices is reduced or eliminated, as shown in Fig. 7B. More specifically, for example, if the video output to the lower display device 30b is delayed relative to the video output to the upper display device 30a by approximately one frame length, then the top scan line of the lower display device 30b (containing image point Y) will be scanned right after the bottom scan line of the upper display device 30a (containing image point X). Thus, the display effect will be similar to when the image points X and Y are displayed on one single display device in a line-by-line scan, which results in a slightly slanted effect but without any visual discontinuity, as depicted in the dashed line circle B in Fig. 7B.

From the above explanation, it can be seen that for optimum effect, the time delay between the video output to vertically adjacent display devices (i.e. the defined time interval) should be approximately the length of time it takes to scan one frame on the display devices 30a-30d. Other time lengths, however, may also be used as the defined time interval, as discussed earlier, which will also help to reduce the visual discontinuity. Acceptable values of the defined time interval may depend, for example, on the nature of the video images being displayed, other factors if the display environment, sensitivity of the human eyes, etc. Therefore, the invention is not limited to particular values of the defined time interval.

Referring back to Fig. 6A, in step 52, the video control device 2 outputs the sub-frames of a frame that are destined for the vertically adjoining display devices to the vertically adjoining display devices 30a and 30b, or 30c and 30d, with time delays based on the defined time interval. For example, for a frame of image obtained from the video source, in order to display the frame simultaneously on the display devices 30a-30d, the video control device 2 divides the frame into four sub-frames, then output the sub-frames for the display devices 30a and 30c at a first time point, waits for a time interval, and then outputs the sub-frames for the display devices 30b and 30d. Because the video signal 90 is formed of multiple frames of image, and the video control device 2 processes and outputs each frame in this manner, the images formed on the video wall are continuously moving images without visual breaks.

Fig. 6B is a flow chart showing a control method for outputting video images with a time delay, which describes step 52 of Fig. 6A in more detail. As shown in Fig. 6B, step 52 is a process that includes steps 520-523. Referring to both Figs. 2 and 4, in step 520, the video delay controller 21 of the video control device 2 receives the frame data and stores it in the storage unit 40. In step 521, the video delay controller 21 acquires the data of the first sub-frame and the second sub-frame from the storage unit 40. In step 521, the video delay controller 21 first reads out the data of the frame, and then divides it into sub-frames. Because the video wall in this embodiment is formed of 2x2 display devices, the video delay controller 21 divides the frame into data of four sub-frames. To eliminate the visual discontinuities between vertically adjoining display devices 30a and 30c or 30b and 30d due to differences in image formation timing, step 522 is performed next: the video delay controller 21 outputs the first sub-frame data to the first display device 30a at the first time point. Then, step 523 is performed: the video delay controller 21 waits for the defined time interval, and then outputs the second sub-frame data to the second display device 30b at the second time point. The defined time interval is the above described time interval, such as the length of time required to display one frame of image or two or more frames of image, the length of time required to display the first or the second sub-frame of image, the length of time required to form one scan line of image, or the length of time required to form one pixel of the scan line, etc. Similarly, for the vertically adjoining third and fourth display devices 30c and 30d, the same steps are performed: the video delay controller outputs the third sub-frame data to the third display device 30c, and then, after waiting for the defined time interval, outputs the fourth sub-frame data to the fourth display device 30d. This completes the display of the data of one frame of the video signal 90. Each frame of the video signal 90 is displayed using the same steps 520-523, to output and display the video signal 90. It should be noted that the video delay controller 21 may have the structure shown in Fig. 4 or that shown in Fig. 5, as described earlier.

To summarize, the video control device, video wall employing such control device, and related control method for controlling output of video images to the video wall according to embodiments of the present invention can effectively eliminate visual discontinuities at boundaries between vertically adjoining display devices, so that the video images displayed by the video wall has a spatially continuous effect. The video control device according to embodiments of the present invention may be adopted for video walls made of display devices of various brands or models, without having to modify the internal structures of the display device, so as to solves the visual discontinuity problem without significant cost increase.

It will be apparent to those skilled in the art that various modification and variations can be made in the video control apparatus and method of the present invention without departing from the spirit or scope of the invention. Thus, it is intended that the present invention cover modifications and variations that come within the scope of the appended claims and their equivalents.

## Claims

1. A control method for outputting video images to a video wall, comprising:
spatially arranging multiple display devices together to form the video wall, wherein the multiple display devices includes a first display device and a second display device that is disposed adjoining the first display device in a vertical direction;
by a video control device, receiving a video signal, wherein the video signal includes data of multiple frames of image; and
by the video control device, outputting data of a first sub-frame of a frame of the multiple frames of image to the first display device at a first time point, waiting for a defined time interval, then outputting data of a second sub-frame of the frame to the second display device at a second time point.

2. The method of claim 1, wherein the defined time interval is a length of time required to display at least one frame of image of the video signal, a length of time required to display the first or the second sub-frame of image, a length of time required to form one scan line of image, or a length of time required to form one pixel of a scan line.

3. The method of claim 1,
wherein the receiving step is performed by a video receiver of the video control device; and
wherein the step of outputting the data of the first and second sub-frames includes, by a video delay controller of the video control device which is electrically coupled to the video receiver, receiving and storing the data of multiple frames of image, reading out the data of the first and second sub-frames corresponding to the first and second display devices, and controlling the waiting for the defined time interval.

4. The method of claim 3, wherein the step of outputting the data of the first and second sub-frames includes:
by the video delay controller, receiving the frame data and storing it in a storage unit of the video control device;
by the video delay controller, reading out the data of the first sub-frame and the data of the second sub-frame from the storage unit;
by the video delay controller, outputting the data of the first sub-frame to the first display device at the first time point; and
by the video delay controller, outputting the data of the second sub-frame to the second display device at the second time point.

5. The method of claim 3, wherein the step of outputting the data of the first and second sub-frames includes:
by a video data acquisition unit of the video delay controller, receiving the frame data;
by a storage controller of the video delay controller which is electrically coupled to the video data acquisition unit, storing the frame data in a storage unit; and
by a frame shift controller of the video delay controller, which is electrically coupled to the storage controller, controlling the storage controller to obtain the data of the first and the second sub-frames, and determining the first and second time points for outputting the first and second sub-frames;
wherein the step of outputting the data of the first and second sub-frames further includes, by a video timing generator of the video delay controller which is electrically coupled to the frame shift controller, converting the data of the first and second sub-frames to a first and a second video sequence data, respectively.

6. The method of claim 5, wherein the converting step includes:
by a first video timing generator of the video timing generator, converting the data of the first sub-frame to the first video sequence data so as to display the first sub-frame on the first display device; and
by a second video timing generator of the video timing generator, converting the data of the second sub-frame to the second video sequence data so as to display the second sub-frame on the second display device.

7. The method of claim 5, wherein the step of outputting data of the first and second sub-frames includes:
by a video data acquisition unit of the video delay controller, receiving the frame data;
by a storage controller of the video delay controller which is electrically coupled to the video data acquisition unit, storing the frame data in a storage unit;
by a frame shift controller of the video delay controller which is electrically coupled to the storage controller, obtaining the data of the first and the second sub-frames from the storage unit;
by the frame shift controller, outputting the data of the first sub-frame to a video timing generator, and by the video timing generator, outputting the data of the first sub-frame to the first display device; and
by the frame shift controller, waiting for the defined time interval and then outputting the data of the second sub-frame to the video timing generator, and by the video timing generator, outputting the data of the second sub-frame to the second display device.

8. A video control device for a video wall, the video wall including a first display device and a second display device that is disposed adjoining the first display device in a vertical direction, the video control device comprising:
a video receiver, configured to receive a video signal, wherein the video signal includes data of multiple frames of image; and
a video delay controller, electrically coupled to the video receiver, configured to receive and store the data of the multiple frames, wherein data of each frame of the multiple frames of image includes data of a first sub-frame of image and data of a second sub-frame of image, wherein the video delay controller is further configured to read out data of one frame of the multiple frames, and to output the data of the first and the second sub-frames of the one frame respectively to the first and second display devices at first and second time points, wherein the first and second time points are separate by a defined time interval.

9. The video control device of claim 8, further comprising a first video transmitter and a second video transmitter, each electrically coupled to the video delay controller, wherein the first video transmitter is configured to transmit the data of the first sub-frame to the first display device at the first time point, and the second video transmitter is configured to transmit the data of the second sub-frame to the second display device at the second time point.

10. The video control device of claim 8, wherein the video delay controller further includes:
a video data acquisition unit, electrically coupled to the video receiver, and configured to acquire the data of each video frame from the video signal;
a storage controller, electrically coupled to the video data acquisition unit, and configured to store the data of each frame into a storage unit; and
a frame shift controller, electrically coupled to the storage controller, and configured to control the storage controller to acquire, from the storage unit, the data of the first and second sub-frames, to output the data of the first sub-frame to the first display device at the first time point, to wait the defined time interval, and then to output the data of the second sub-frame to the second display device at the second time point;
wherein the video delay controller further includes a video timing generator, electrically coupled to the frame shift controller, and configured to convert the data of the first and second sub-frames to first and second video sequence data, respectively.

11. The video control device of claim 10, wherein the video timing generator includes multiple video timing generators, each electrically coupled to the frame shift controller, wherein each video timing generator is coupled to a respective one of the video transmitters, wherein one of the multiple video timing generators is configured to generate a first video sequence data based on the data of the first sub-frame to be displayed on the first display device, and another one of the multiple video timing generators is configured to generate a second video sequence data based on the data of the second sub-frame to be displayed on the second display device.

12. A video wall system comprising:
a video wall, formed by multiple display devices spatially arranged together, including a first display device and a second display device that is disposed adjoining the first display device in a vertical direction; and
a video control device, which includes:
a video receiver, configured to receive a video signal, wherein the video signal includes data of multiple frames of image; and
a video delay controller, electrically coupled to the video receiver, configured to receive and store the data of the multiple frames, wherein data of each frame of the multiple frames of image includes data of a first sub-frame of image and data of a second sub-frame of image, wherein the video delay controller is further configured to read out data of one frame of the multiple frames, and to output the data of the first and the second sub-frames of the one frame respectively to the first and second display devices at first and second time points, wherein the first and second time points are separate by a defined time interval.

13. The video wall system of claim 12, wherein the video control device further includes a first video transmitter and a second video transmitter, each electrically coupled to the video delay controller, wherein the first video transmitter is configured to transmit the data of the first sub-frame to the first display device at the first time point, and the second video transmitter is configured to transmit the data of the second sub-frame to the second display device at the second time point.

14. The video wall system of claim 12, wherein the video delay controller further includes:
a video data acquisition unit, electrically coupled to the video receiver, and configured to acquire the data of each video frame from the video signal;
a storage controller, electrically coupled to the video data acquisition unit, and configured to store the data of each frame into a storage unit; and
a frame shift controller, electrically coupled to the storage controller, and configured to control the storage controller to acquire, from the storage unit, the data of the first and second sub-frames, to output the data of the first sub-frame to the first display device at the first time point, to wait the defined time interval, and then to output the data of the second sub-frame to the second display device at the second time point;
wherein the video delay controller further includes a video timing generator, electrically coupled to the frame shift controller, and configured to convert the data of the first and second sub-frames to first and second video sequence data, respectively.

15. The video wall system of claim 14, wherein the video timing generator includes multiple video timing generators, each electrically coupled to the frame shift controller, wherein each video timing generator is coupled to a respective one of the video transmitters, wherein one of the multiple video timing generators is configured to generate a first video sequence data based on the data of the first sub-frame to be displayed on the first display device, and another one of the multiple video timing generators is configured to generate a second video sequence data based on the data of the second sub-frame to be displayed on the second display device.
